## Europäisches Patentamt
## European Patent Office
## Office européen des brevets

(11) Numéro de publication: **0 104 978**
**B1**

(12) **FASCICULE DE BREVET EUROPÉEN**

(45) Date de publication du fascicule du brevet:
22.07.87

(21) Numéro de dépôt: **83401731.1**

(22) Date de dépôt: **31.08.83**

(51) Int. Cl.⁴: **G 01 F 15/02,** G 01 F 9/00, G 01 F 1/90

(54) Appareil de mesure de la consommation de carburant.

(30) Priorité: **31.08.82 FR 8214890**

(43) Date de publication de la demande:
**04.04.84 Bulletin 84/14**

(45) Mention de la délivrance du brevet:
**22.07.87 Bulletin 87/30**

(84) Etats contractants désignés:
**AT BE CH DE FR GB IT LI LU NL SE**

(56) Documents cité:
**GB-A-2 054 039**
**US-A-4 134 301**

**ÖLHYDRAULIK UND PNEUMATIK, vol. 11, no. 9, septembre 1967, Kraftstoff-Verlag für Wirtschaft GmbH, Mayence (DE), O. ENGLERT: "Ovalradzähler für die Automatisierung", pages 346-357**

(73) Titulaire: **AERO PRODUCT EUROPA, B.P. 1 Soudan, F-44110 Chateaubriant (FR)**

(72) Inventeur: **Colonnello, Rino, Le Bois de Saulzay Soudan, F-44110 Chateaubriant (FR)**

(74) Mandataire: **Phélip, Bruno, c/o Cabinet Harlé & Phélip 21, rue de la Rochefoucauld, F-75009 Paris (FR)**

## Description

La présente invention concerne la mesure de la consommation en carburant du moteur d'un véhicule, que celui-ci soit en marche ou à l'arrêt. Plus précisément, elle concerne un appareil de mesure de la consommation en carburant d'un moteur de véhicule qui comprend un circuit d'alimentation comprenant une pompe et disposé entre un réservoir de carburant et le moteur, et un circuit de retour de carburant excédentaire, disposé entre le moteur et le réservoir.

On connaît déjà des appareils de mesure de la consommation de carburant d'un moteur, car cette mesure présente un intérêt indéniable pour les bureaux d'études qui travaillent sur les moteurs thermiques. Il est cependant très souhaitable que cette consommation puisse être suivie en continu car elle est représentative des conditions de fonctionnement d'un véhicule. Par exemple, dans une flotte de poids lourds, une gestion optimale des transports nécessite la connaissance des consommations. Cependant, même dans le cas d'un véhicule automobile particulier, la connaissance de cette consommation est très souhaitable.

Le brevet des Etats-Unis d'Amérique n° 4 134 301 décrit un appareil de mesure de la consommation de carburant d'un moteur thermique, comprenant deux débitmètres ayant des cuves à niveau constant. Des capteurs de température mesurent la température du carburant à l'entrée et à la sortie et permettent une compensation des valeurs de débit données par les débitmètres. L'appareil comporte des dispositifs de mesure par gravité et des dispositifs destinée à chasser les bulles de vapeur qui se forment. L'utilisation d'un tel appareil de laboratoire n'est pas possible sur un véhicule compte tenu de la nature des débitmètres (cuves à niveau constant) et de la grande probabilité de formation de bulles en cas de secousses et de vibrations. En outre, cet appareil de laboratoire ne donne pas des résultats très reproductibles dans le cas des faibles débits car ceux-ci sont perturbés par la présence de bulles de vapeur, même en très petite quantité. Le coût de cet appareil est en outre très élevé.

L'invention concerne un appareil permettant la mesure de la consommation de carburant d'un moteur thermique monté sur un véhicule, pendant le fonctionnement de ce dernier et comportant un premier débitmètre monté dans le circuit d'alimentation muni d'une pompe et un second débitmètre monté dans le circuit de retour de carburant. Selon l'invention, l'un des débits au moins est compensé en fonction de la température du carburant si bien que la comparaison des deux débits, après compensation, donne un signal représentatif du débit réel consommé, avec une grande précision. La compensation peut être une modification réelle de l'un des débits en fonction de la différence de températures du carburant à l'alimentation et au retour, ou une compensation par le calcul destinée à modifier les signaux représentatifs du débit.

Plus précisément, et conformément à la définition qui en est donnée par la revendication 1, l'invention a pour objet un appareil de mesure de la consommation volumique de carburant d'un moteur thermique du type comprenant

- un circuit d'alimentation en carburant, placé entre un réservoir et le moteur et sur lequel est monté un premier débitmètre volumétrique délivrant un premier signal de débit,

- un circuit de retour de carburant du moteur vers le réservoir et sur lequel est monté un second débitmètre délivrant un second signal de débit,

- au moins un dispositif thermosensible à la température du carburant, et

- un dispositif destiné à combiner lesdits premier et second signaux de débit et à former, en collaboration avec ledit dispositif thermosensible, un signal de débit consommé; l'appareil est tel que

- lesdits premier et second débitmètres présentent une plage de mesure pour faibles débits et ledit moteur thermique équipe un véhicule,

- une pompe à carburant est montée dans le circuit d'alimentation,

- lesdits premier et second débitmètres sont du type à roues elliptiques tournant dans un boîtier, et

- ledit dispositif thermosensible à la température du carburant est destiné à compenser au moins un desdits premier et second signaux de débit en fonction de la variation de température due à une différence de température entre les premier et second débitmètres.

Le dispositif thermosensible de compensation comporte avantageusement:

un premier capteur de température associé au premier débitmètre et destiné à former un premier signal représentatif de la température du carburant dans le premier débitmètre,

un second capteur de température associé au second débitmètre et destiné à former un second signal représentatif de la température du carburant dans le second débitmètre, et

un dispositif destiné à compenser le premier ou le second signal de débit au moins en fonction des signaux de température des deux capteurs, le dispositif de compensation formant ainsi des signaux compensés de débit volumique.

Les deux débitmètres sont avantageusement d'un type compensé en température tel que, dans toute la plage prévue de températures du carburant, un même signal de débit volumique est représentatif d'un même volume de carburant.

Les débitmètres peuvent être d'un type qui n'est pas compensé en température et tel qu'un même signal de débit est représentatif d'un volume qui varie avec la température dans la plage prévue de températures du carburant, cette variation correspondant à une courbe d'étalonnage de chaque débitmètre, et le dispositif de compensation des signaux de débit compense alors ceux-ci en fonction d'une part de la courbe d'étalonnage et d'autre part des variations de la masse volumique apparente du carburant avec la température.

Dans un mode de réalisation, le dispositif thermosensible de compensation comporte un conduit (48) de dérivation formé entre l'entrée et la sortie de l'un des débitmètres et un clapet à commande thermosensible monté dans le conduit de dérivation et destiné à permettre la circulation dans celui d'un débit variant avec la température.

Le dispositif de compensation et le dispositif de combinaison sont avantageusement sous forme d'un microordinateur programmé.

L'appareil comporte en outre avantageusement un dispositif indicateur du débit consommé et destiné à recevoir le signal de débit consommé du circuit de combinaison. Ce dispositif indicateur peut être par exemple un dispositif d'affichage ou un dispositif d'enregistrement.

D'autres caractéristiques et avantages de l'invention ressortiront mieux de la description qui va suivre, faite en référence au dessin annexé sur lequel:

la figure 1 est un schéma d'un appareil de mesure de la consommation d'un moteur thermique, réalisé selon l'invention; et

la figure 2 est un schéma d'une partie d'appareil analogue à celui de la figure 1 mais correspondant à une variante de réalisation.

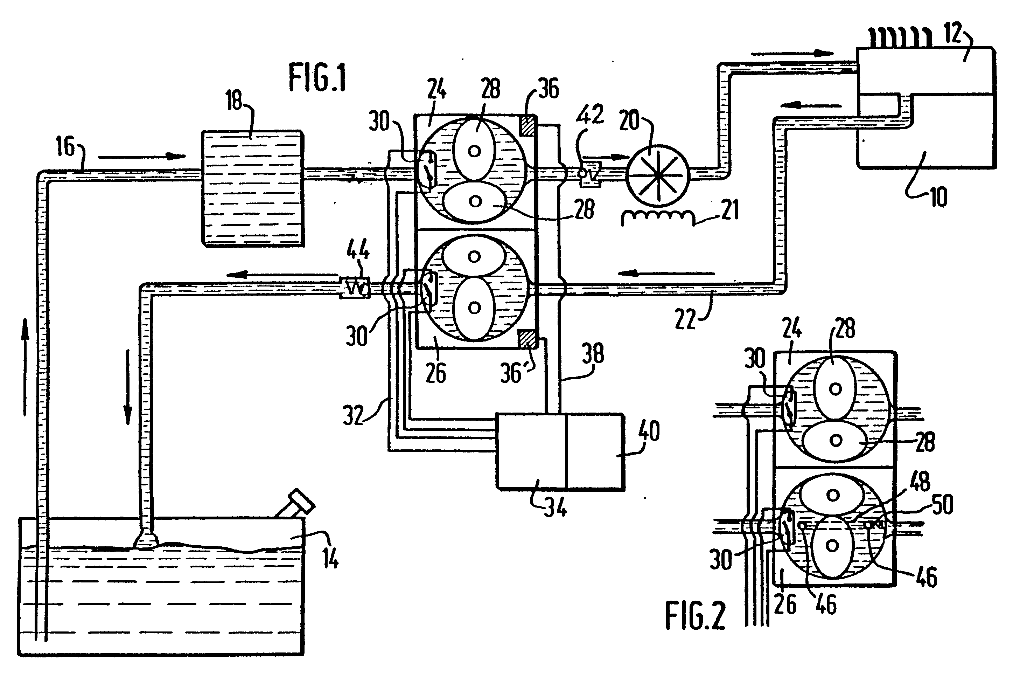

Sur la figure 1, la référence 10 désigne un moteur du type à injection qui est muni d'injecteurs 12. Ceux-ci reçoivent du carburant provenant du réservoir 14 per l'intermédiaire d'un circuit 16 d'alimentation. Celui-ci comprend successivement, à partir du réservoir 14, un filtre 18 et une pompe 20. De manière connue, celle-ci peut être munie d'un dispositif 21 de chauffage, notamment lorsque le moteur 10 est un moteur diesel.

Un circuit 22 de retour transmet l'excès du carburant parvenant aux injecteurs 12 vers le réservoir 14.

Selon l'invention, deux débitmètres 24, 26 sont disposés l'un dans le circuit 16 d'alimentation et l'autre dans le circuit 22 de retour. Ces débitmètres comportent chacun deux roues elliptiques 28 qui tournent dans un boîtier étanche. Un codeur 30 transmet par exemple une impulsion à chaque tour des roues 28 et constitue donc un capteur de débit volumique. Les impulsions du codeur 30 parviennent par une ligne 32 à un circuit 34, décrit plus en détail dans la suite du présent mémoire. Chacun des deux débitmètres 24, 26 est muni d'un capteur 36, 36' de température. Le capteur est au contact du boîtier du débitmètre et, étant donné que ce boîtier est formé d'une matière qui conduit bien la chaleur, par exemple un alliage moulé d'aluminium, le signal de chaque capteur 36, 36', est représentatif de la température du carburant qui circule dans le débitmètre associé. Les signaux des capteurs 36, 36' parviennent aussi par des lignes 38 aux circuits précités 34.

Selon une caractéristique très avantageuse de l'invention, les roues elliptiques 28 et le boîtier de chaque débitmètre 24, 26 ont un même coefficient de dilatation thermique. Cette caractéristique est très utile car elle assure pratiquement la compensation en température du débitmètre. Plus précisément, une même valeur indiquée par le débitmètre à des températures différentes représente un même débit volumique. Cette caractéristique très avantageuse n'existe pas actuellement dans les débitmètres connus de ce type. Par exemple, lorsque le boîtier est formé d'un alliage moulé d'aluminium, les roues elliptiques 28 peuvent être formées d'une résine alkyde ou d'un polyester armé de fibres de verre. Bien entendu, les hommes du métier peuvent facilement choisir un couple de matières ayant un même coefficient de dilatation thermique pour la réalisation de tels débitmètres. En outre, les roues elliptiques et le boîtier peuvent aussi être fermés éventuellement d'une même matière.

Le circuit 34 reçoit donc des signaux représentatifs du débit volumique dans le circuit d'alimentation 16 et dans le circuit de retour 22, ainsi que des signaux représentatifs des températures du carburant dans les deux circuits. Ce circuit 34 est en fait un microordinateur convenablement programmé. Il joue donc le rôle d'un circuit de combinaison de signaux, de compensation et de calcul. Plus précisément, le circuit 34 compense le signal de débit provenant de chaque débitmètre en fonction de la température du carburant. En effet, la masse volumique apparente du carburant varie beaucoup avec la température et un débit volumique correspond donc à des quantités différentes de carburant. Lorsqu'il a ainsi compensé chacun des signaux de débit, le circuit 34 les soustrait et détermine ainsi la valeur du débit consommé. Un dispositif indicateur 40 peut afficher cette valeur.

Il n'est pas indispensable, selon l'invention, que les débitmètres 24 et 26 soient d'un type compensé en température. Dans une variante, les débitmètres donnent un signal de débit qui correspond à un volume variable lorsque la température varie. Cependant, cette variation de volume peut être déterminée préalablement sous forme d'une courbe d'étalonnage. Dans ce cas, le circuit 34, lorsqu'il reçoit le signal de débit d'un codeur 30, commence par le corriger d'après la courbe d'étalonnage du débitmètre. Cette valeur corrigée subit ensuite la compensation en fonction de la variation de la masse volumique avec la température indiquée par le capteur associé. Dans ce cas, le circuit 34 effectue simplement une opération supplémentaire de correction des informations qu'il reçoit.

Le signal formé par le circuit 34 peut être de différents types. Il peut s'agir d'une consommation horaire, d'une consommation instantanée ou d'une consommation ramenée à une valeur de référence, par exemple une consommation aux 100 kilomètres. Le circuit 34 de calcul dispose de toutes les informations nécessaires à cet effet et il suffit qu'il soit programmé pour donner le résultat sous toute forme voulue. Bien entendu, le circuit 34 peut en outre effectuer d'autres calculs tels que des moyennes, des valeurs simulées, etc.. En outre, le circuit 34 peut être constitué par un microordinateur existant déjà sur un véhicule.

Le signal formé par le circuit 34 peut être simplement affiché ou il peut être enregistré. Il peut aussi être utilisé pour la commande automatique d'un appareillage quelconque. Bien entendu, on ne décrit pas en détail un tel microordinateur car il est réalisé d'une manière bien connue des hommes du métier, avec un microprocesseur, des mémoires active et passive, des circuits d'entrée-sortie, etc.

Comme représenté sur la figure 1, le circuit peut comprendre, dans une variante avantageuse, des clapets 42 et 44 placés à la sortie du débitmètre d'alimentation et à la sortie du débitmètre de retour. Ces clapets assurent le maintien en charge du circuit. Le clapet 42 évite que d'éventuelles oscillations de pression de la pompe puissent perturber le fonctionnement du débitmètre 24.

La figure 2 représente une autre variante, sous forme d'une partie du circuit de la figure 1. Dans cette variante, les capteurs 36, 36', de température sont supprimés, et la compensation est assurée par un dispositif thermosensible. Ce dernier comporte deux orifices 46 qui débouchent dans le débitmètre 26 de part et d'autre des roues elliptiques. Ils sont reliés par un conduit 48 de dérivation. Un clapet thermosensible 50 permet la circulation d'un débit plus ou moins grand dans le conduit 48 de dérivation. Le débit dans ce conduit correspond à l'augmentation de volume entre la température du premier débitmètre 24 et celle du second débitmètre 26 (carburant du circuit de retour). Dans ce cas, la compensation du signal de débit est assurée d'une manière purement mécanique.

La description qui précède concerne un appareil de mesure de la consommation de carburant d'un moteur à injection. L'invention s'applique cependant aussi aux moteurs à alimentation par carburateur, dans la mesure où le circuit d'alimentation est associé à un circuit de retour. Ces moteurs peuvent être montés sur des véhicules terrestres (véhicules automobiles), aériens ou marins (des bateaux et navires de pêche).

L'appareil réalisé selon l'invention présente de nombreux avantages. D'abord, les résultats obtenus sont très précis, la consommation étant déterminée avec une précision de l'ordre du millième. L'appareil est très simple car il ne comporte que deux débitmètres associés au circuit de calcul. L'ensemble forme un tout peu encombrant et inviolable. La simplicité des débitmètres permet la réalisation de l'appareil à un faible coût, bien inférieur à celui des débitmètres actuellement connus.

## Revendications

1. Appareil de mesure de la consommation volumique de carburant d'un moteur thermique (10) du type comprenant
- un circuit (16) d'alimentation en carburant, placé entre un réservoir (14) et le moteur (10) et sur lequel est monté un premier débitmètre volumétrique (24) délivrant un premier signal de débit,
- un circuit (22) de retour de carburant du moteur (10) vers le réservoir (14) et sur lequel est monté un second débitmètre (26) délivrant un second signal de débit,
- au moins un dispositif (36, 36', 50) thermosensible à la température du carburant,
- un dispositif (34) destiné à combiner lesdits premier et second signaux de débits et à former, en collaboration avec ledit dispositif thermosensible (36, 36', 50) un signal de débit volumétrique consommé, ledit appareil de mesure étant caractérisé en ce que
- lesdits premier (24) et second (26) débitmètres présentent une plage de mesure pour faibles débits, ledit moteur thermique (10) étant monté sur un véhicule,
- une pompe (20) à carburant est montée dans le circuit (16) d'alimentation,
- lesdits premier (24) et second (26) débitmètres sont du type à roues elliptiques (28) tournant dans un boîtier,
- ledit dispositif (36, 36', 50) thermosensible à la température du carburant est destiné à compenser au moins un desdits premier et second signaux de débit en fonction d'une variation de température correspondant à une différence de température entre les premier (24) et second (26) débitmètres.

2. Appareil selon la revendication 1, caractérisé en ce que les deux débitmètres (24, 26) sont d'un type compensé en température tel que, dans toute la plage des températures prévues du carburant, un même signal de débit volumique est représentatif d'un même volume de carburant.

3. Appareil selon l'une des revendications 1 et 2, caractérisé en ce que les roues elliptiques (28) et le boîtier sont formés de matières ayant sensiblement le même coefficient de dilatation thermique dans toute la plage prévue de températures du carburant.

4. Appareil selon l'une des revendications 1 et 2, caractérisé en ce que le dispositif thermosensible de compensation comprend un conduit (48) de dérivation formé entre l'entrée et la sortie de l'un des débitmètres (24, 26), et un clapet, (50) à commande thermosensible monté dans le conduit de dérivation et destiné à permettre la circulation dans celui-ci d'un débit variant avec la température.

5. Appareil selon l'une des revendications 1 et 2, caractérisé en ce que le dispositif thermosensible de compensation comporte:

- un premier capteur de température (36) associé au premier débitmètre (24) et destiné à former un premier signal représentatif de la température du carburant dans le premier débitmètre (24),

- un second capteur de température (36') associé au second débitmètre (26) et destiné à former un second signal représentatif de la température du carburant dans le second débitmètre (26), et

- un dispositif (34) destiné à compenser le premier ou le second signal de débit au moins en fonction des signaux de température des deux capteurs (36, 36'), le dispositif de compensation formant ainsi des signaux compensés de débit volumique.

6. Appareil selon la revendication 1, caractérisé en ce que les débitmétres (24, 26) sont d'un type qui n'est pas compensé en température et tel qu'un même signal de débit est représentatif d'un volume qui varie avec la température dans la plage prévue de températures du carburant, cette variation correspondant à une courbe d'étalonnage de chaque débitmètre (24, 26), et le dispositif de combinaison (34) assure la compensation des signaux de débit en fonction d'une part de la courbe d'étalonnage et d'autre part des variations de la masse volumique apparente du carburant avec la température.

7. Appareil selon l'une quelconque des revendications précédentes, caractérisé en ce que le dispositif de combinaison (34) est un microordinateur.

8. Appareil selon l'une quelconque des revendications précédentes, caractérisé en ce qu'il comporte en outre un dispositif (40) indicateur du débit consommé et destiné à recevoir le signal de débit consommé du circuit (34) de combinaison.

**Patentansprüche**

1. Meßeinrichtung für den volumenmäßigen Kraftstoffverbrauch eines Verbrennungsmotors (10) der Bauart mit
einer Kraftstoffspeiseleitung (16), die zwischen einem Behälter (14) und dem Motor (10) angeordnet ist und in die ein erster Volumen-Durchflußmesser (24) eingefügt ist, die ein erstes Durchflußsignal abgibt, einer Kraftstoffrückführleitung (22), die von dem Motor (10) zu dem Behälter (14) zurückführt und in die ein zweiter Volumen-Durchflußmesser (26) eingefügt ist, der ein zweites Durchflußsignal abgibt, wenigstens einer die Temperatur des Kraftstoffs erfassenden Einrichtung (36, 36', 50), sowie einer Verknüpfungseinrichtung (34), welche die ersten und zweiten Durchflußsignale verknüpft, um zusammen mit der die Temperatur erfassenden Einrichtung (36, 36', 50) ein Signal des verbrauchten Kraftstoffvolumens zu bilden,

dadurch gekennzeichnet, daß der erste (24) und der zweite (26) Durchflußmesser einen Meßbereich für kleine Durchflüsse darstellen und der Verbrennungsmotor (10) in einem Fahrzeug eingebaut ist,
daß eine Kraftstoffpumpe (20) in der Speiseleitung (16) eingefügt ist,
daß der erste (24) und der zweite (26) Durchflußmesser die Ovalradbauart mit sich in einem Gehäuse drehenden Ovalrädern aufweisen
und daß die die Temperatur des Kraftstoffs erfassende Einrichtung (36, 36', 50) zum kompensieren wenigstens eines der beiden ersten und zweiten Durchflußsignale in Abhängigkeit einer Temperaturänderung eingerichtet ist, die einer Temperaturdifferenz zwischen dem ersten (24) und dem zweiten (26) Durchflußmesser entspricht.

2. Meßeinrichtung nach Anspruch 1,
dadurch gekennzeichnet, daß die beiden Durchflußmesser (24, 26) temperaturkompensiert sind, so daß in dem Vorgesehenen Temperaturbereich des Kraftstoffs jeweils ein gleiches Kraftstoffvolumensignal das selbe Kraftstoffvolumen darstellt.

3. Meßeinrichtung nach den Ansprüchen 1 und 2,
dadurch gekennzeichnet, daß die Ovalräder (28) und das Gehäuse aus Materialien bestehen, die im wesentlichen den gleichen Wärmedehnungskoeffizienten in dem gesamten vorgesehenen Temperaturbereich des Kraftstoffs aufweisen.

4. Meßeinrichtung nach einem der Ansprüche 1 und 2,
dadurch gekennzeichnet, daß die Temperaturkompensationseinrichtung eine Neben-Leitung (48) zwischen dem Eingang und dem Ausgang eines der Durchflußmesser (24; 26) sowie ein temperaturabhängig betätigtes Ventil (50) umfaßt, welches in der Neben-Leitung angeordnet ist und in dieser eine Strömung mit einem temperaturabhängigen Durchfluß einstellt.

5. Meßeinrichtung nach einem der Ansprüche 1 und 2,
dadurch gekennzeichnet, daß die Temperaturkompensationseinrichtung umfaßt:
einen ersten Temperaturfühler (36), welcher dem ersten Durchflußmesser (24) zugeordnet und zum Bilden eines ersten Signals eingerichtet ist, welches der Kraftstofftemperatur in dem ersten Durchflußmesser (24) entspricht,
einen zweiten Temperaturfühler (36'), der dem zweiten Durchflußmesser (26) zugeordnet ist und zum Bilden eines zweiten Signals eingerichtet ist, welches der Kraftstofftemperatur in dem zweiten Durchflußmesser (26) entspricht, und
einer Kompensationseinrichtung (34), die zum Kompensieren des ersten oder des zweiten Durchflußsignals wenigstens in Abhängigkeit der Temperatursignale der beiden Temperaturfühler, (36, 36') wobei die Kompensationseinrichtung Signale des kompensierten Volumendurchflusses bildet.

6. Meßeinrichtung nach Anspruch 1,

dadurch gekennzeichnet, daß die Durchflußmesser (24, 26) nicht temperaturkompensiert sind, und so daß ein von ihnen abgegebenes gleiches Durchflußsignal einem Volumen entspricht, welches in Abhängigkeit von der Temperatur in dem vorgesehenen Temperaturbereich des Kraftstoffs variiert, wobei diese Variation einer Eichkurve jedes Durchflußmessers (24, 26) entspricht, und daß die Verknüpfungseinrichtung (34) die Kompensation der Durchflußsignale in Abhängigkeit einerseits der Eichkurve und andererseits der Änderungen des scheinbaren Massedurchflusses des Kraftstoffes mit der Temperatur sicherstellt.

7. Meßeinrichtung nach einem der vorangehenden Ansprüche,

dadurch gekennzeichnet, daß die Verknüpfungseinrichtung (34) ein Mikrocomputer ist.

8. Meßeinrichtung nach einem der vorangehenden Ansprüche,

dadurch gekennzeichnet, daß sie zusätzlich eine Verbrauchsanzeigeeinrichtung (40) aufweist, welche das Signal des verbrauchten Durchflusses von der Verknüpfungsschaltung (34) empfängt.


**Claims**

1. Apparatus for measuring the volume consumption of fuel of a heat engine (10) of the type comprising

a fuel supply circuit (16) located between a tank (14) and the engine (10) and on which there is mounted a first volumetric flow meter (24) supplying a first throughput signal,

a fuel return circuit (22) from the engine (10) to the tank (14) and on which there is mounted a second flow meter (26) supplying a second throughput signal,

at least one device (36, 36', 50) heat-sensitive to the temperature of the fuel,

a device (34) intended to combine the said first and second throughput signals and to form, in conjunction with the said heat-sensitive device (36, 36', 50) a signal representing the volumetric throughput consumed,

the said measuring apparatus being characterized in that

the said first (24) and second (26) flow meters exhibit a range of measurement for low throughputs, the said heat engine (10) being mounted on a vehicle,

a fuel pump (20) is mounted in the supply circuit (16),

the said first (24) and second (26) flow meters are of the type including elliptical wheels (28) turning in a casing,

the said device (36, 36', 50) heat-sensitive to the temperature of the fuel is intended to compensate at least one of the said first and second throughput signals as a function of a variation of temperature corresponding to a difference in temperature between the first (24) and second (26) flow meters.

2. Apparatus according to Claim 1, characterized in that the two flow meters (24, 26) are of a type which is temperature-compensated so that, throughout the entire range of expected temperatures of the fuel, a specific volume throughput signal represents a specific volume of fuel.

3. Apparatus according to one of Claims 1 and 2, characterized in that the elliptical wheels (28) and the casing are formed of materials having substantially the same coefficient of thermal expansion throughout the entire expected range of temperatures of the fuel.

4. Apparatus according to one of Claims 1 and 2, characterized in that the heat-sensitive compensating device comprises a branch duct (48) formed between the inlet and the outlet of one of the flow meters (24, 26) and a heat-sensitive control valve (50) mounted in the branch duct and intended to permit the circulation, in the latter, of a throughput varying with the temperature.

5. Apparatus according to one of Claims 1 and 2, characterized in that the heat-sensitive compensating device comprises:

a first temperature sensor (36) associated with the first flow meter (24) and intended to form a first signal representing the temperature of the fuel in the first flow meter (24),

a second temperature sensor (36') associated with the second flow meter (26) and intended to form a second signal representing the temperature of the fuel in the second flow meter (26), and

a device (34) intended to compensate the first or the second throughput signal at least as a function of the temperature signals of the two sensors (36, 36'), the compensating device thus forming compensated signals representing the volume throughput.

6. Apparatus according to Claim 1, characterized in that the flow meters (24, 26) are of a type which is not temperature-compensated and such that a specific throughput signal represents a volume which varies with the temperature within the expected range of temperatures of the fuel, this variation corresponding to a calibration curve for each flow meter (24, 26), and the combining device (34) ensures the compensation of the throughput signals as a function, on the one hand, of the calibration curve and, on the other hand, of the variations of the apparent density of the fuel with the temperature.

7. Apparatus according to any one of the preceding claims, characterized in that the combining device (34) is a microcomputer.

8. Apparatus according to any one of the preceding claims, characterized in that it further comprises a device (40) to indicate the throughput consumed and intended to receive the signal representing the consumed throughput from the combining circuit (34).

FIG.1

FIG.2